# FASCICULE DE BREVET EUROPEEN

(11) **EP 3 234 240 B1**
(45) Date de publication et mention de la délivrance du brevet: **04.09.2024**
(21) Numéro de dépôt: 15817480.5
(22) Date de dépôt: 07.12.2015
(51) Int. Cl.: D04B 21/14, D04B 21/16, F21V 8/00

(54) **STRUCTURE TEXTILE LUMINEUX INTÉGRANT DES FIBRES OPTIQUES**
LEUCHTENDE TEXTILSTRUKTUR MIT OPTISCHEN FASERN
LUMINOUS TEXTILE STRUCTURE COMPRISING OPTICAL FIBRES

(30) Priorité: 16.12.2014 FR 1462538
(43) Date de publication de la demande: 25.10.2017
(73) Titulaire: MDB Texinov, 38110 la Tour du Pin (FR); Deltaval, 69006 Lyon (FR)
(72) Inventeur: TANKERE, Jacques, 01800 Meximieux (FR); BOUCARD, Nadège, 38480 Le Pont de Beauvoisin (FR); MIGNOT, Eric, 38620 Velanne (FR); DONGE, Charlotte, 38110 La Tour du Pin (FR)
(74) Mandataire: Cabinet Laurent & Charras
(86) Numéro de dépôt international: PCT/FR2015/053343
(87) Numéro de publication internationale: WO 2016/097524

(56) Documents cités:
- WO-A2-2007/078319
- DE-A1- 102008 018 805
- DE-U1- 202011 000 321
- CÉDRIC COCHRANE ET AL: "New design of textile light diffusers for photodynamic therapy", MATERIALS SCIENCE AND ENGINEERING: C, vol. 33, no. 3, 1 April 2013 (2013-04-01), pages 1170 - 1175, XP055176297, ISSN: 0928-4931, DOI: 10.1016/j.msec.2012.12.007
- ALI HARLIN ET AL: "DEVELOPMENT OF POLYMERIC OPTICAL FIBRE FABRICS AS ILLUMINATION ELEMENTS AND TEXTILE DISPLAYS", AUTEX RESEARCH JOURNAL, 31 March 2003 (2003-03-31), XP055176289, Retrieved from the Internet <URL:http://www.autexrj.com/cms/zalaczone_pliki/1-03-1.pdf> [retrieved on 20150313]

## Description

### DOMAINE TECHNIQUE

La présente invention concerne une structure textile tricotée Rachel mettant en oeuvre des fibres optiques intégrées dans la structure textile, afin notamment de diffuser de la lumière par courbure desdites fibres optiques, mieux connue sous l'expression anglo-saxonne « *macro-bending* ».

Elle concerne les applications d'une telle structure pour la luminothérapie médicale ou cosmétique, pour des textiles lumineux, pour des textiles à propriétés optiques, pour lesquelles l'homogénéité du signal sur toute la surface textile ainsi que la quantité de lumière diffusée sont deux paramètres choisis et maitrisés.

### ETAT ANTERIEUR DE LA TECHNIQUE

Des produits textiles intégrant une à quelques fibres optiques (inférieur à 10) à des fins de détection ont été abondamment décrits, par exemple dans des structures canevas (WO 2007/078319) avec des fibres optiques insérées de manière rectiligne ou le plus rectiligne possible (FR 2 844 874).

Par ailleurs, il est bien connu de mettre en oeuvre des fibres optiques au sein de structures textiles, devenant alors lumineuses et appelées couramment « *Light Emitting Fabrics* » (LEF) par la technologie du tissage. Ainsi, les documents FR 2859736, FR 2 859 737 ou encore FR 2 908 864 décrivent de telles structures tissées obtenues par technologie Jacquard. Ces structures textiles ont diverses applications, et par exemple, les complexes éclairants, la dépollution par photocatalysc, etc.

L'effet lumineux obtenu avec de telles structures est perpendiculaire au tissu obtenu grâce à un traitement de la surface des fibres optiques, générant des micros-trous (obtenus par sablage), c'est-à-dire des orifices de sortie de la lumière. Divers inconvénients résultent de cette technologie :
- en raison de ces orifices, la lumière diffuse par « spots » lumineux, créant ainsi des zones fortes et concentrées en lumière au niveau de ces orifices, et des zones moins concentrées en lumière dès que l'on s'éloigne des orifices, générant de fait des inhomogénéités locales ;
- création de « points chauds » de manière fréquente, c'est-à-dire de points au niveau desquels la température est relativement élevée ; en effet, les points de sortie de la lumière correspondent à une modification de la surface des fibres optiques ;
- nécessité d'une étape spécifique de traitement de surface par micro-sablage des fibres optiques, afin de générer ces orifices, avant le tissage proprement dit, source de coût et de perte de temps outre de risque de casse en raison de la manipulation desdites fibres.

Indépendamment de l'étape supplémentaire de traitement de surfaces des fibres optiques, l'expérience démontre que l'intensité lumineuse générée latéralement avec ce procédé s'avère insuffisante pour un certain nombre d'applications, notamment en ce qui concerne la luminothérapie médicale.

On connaît également des structures textiles tricotées intégrant des fibres optiques, mais en vue de la réalisation de capteurs de courbure (WO2007/078319).

De fait, et afin de surmonter ces inconvénients, l'invention propose en premier lieu de ne pas altérer la surface des fibres optiques, mais de jouer sur le dépassement de l'angle de courbure limite desdites fibres par la technologie dite du « *macro bending* »*.*

Cette technologie consiste à courber lesdites fibres optiques d'un angle supérieur à cet angle de courbure limite, engendrant alors une fuite de la lumière dans le plan de la courbure, et donc corollairement, l'émission de lumière dans ledit plan. Cet angle de courbure limite dépend intrinsèquement du matériau constituant la fibre optique, ainsi que du diamètre de cette dernière. Ainsi, pour une fibre optique donnée, l'émission de lumière s'effectue, comme déjà dit dans le plan de la courbure, et est dépendante de la contrainte appliquée à ladite fibre. Or, afin de disposer d'une intensité de diffusion constante avec cette technologie, l'angle de courbure limite desdites fibres optiques doit également pouvoir être conservé lors de la mise en oeuvre du textile les intégrant.

La présente invention s'inscrit dans ce mode d'émission de lumière.

### EXPOSE DE L'INVENTION

Ainsi, l'invention propose, afin de conserver ces angles de courbure limite des fibres optiques, de mettre en oeuvre la technologie du tricotage maille jetée. De fait, en choisissant la maille appropriée, outre la densité desdites mailles, il devient possible de disposer d'une part, d'une diffusion de lumière uniforme, et d'autre part, d'une intensité lumineuse correspondant aux besoins attendus.

L'invention concerne une structure textile tricotée, selon la revendication 1, comprenant en son sein des fibres optiques dont l'une au moins des extrémités est connectable à une source lumineuse, ledit tricot étant obtenu par la technologie à mailles jetées type Chaîne ou Rachel ou Crochet, et lesdites fibres optiques sont capables d'émettre de la lumière en raison du dépassement de leur angle de courbure limite, et la structure étant caractérisée en ce que l'émission lumineuse est homogène sur toute la surface de ladite structure, et en ce que l'homogénéité de l'émission lumineuse est obtenue en raison du positionnement des fibres optiques en trames partielles au sein de ladite structure selon un pas variable ou progressif compensant par la variabilité l'épuisement de l'énergie lumineuse au fur et à mesure de sa progression au sein des fibres optiques.

Avantageusement, ce tricotage intervient en une seule étape.

L'objet de la présente invention se différencie d'une partie de l'état antérieur de la technique tout d'abord en ce que la structure textile lumineuse est obtenue par tricotage à maille jetée. Par ailleurs, le nombre d'armures permet de maintenir la courbure souhaitée des fibres optiques tout en conférant une certaine souplesse et une certaine extensibilité à ladite structure, et par voie de conséquence de maitriser la quantité et la qualité de lumière émise. La lumière est obtenue en raison du dépassement de l'angle de courbure limite des fibres optiques. Par ailleurs, il devient possible d'obtenir une telle structure en une seule étape, générant dès lors des grains de productivité importants.

Selon l'invention, les fibres optiques sont positionnées en trame partielle selon un pas variable ou progressif, compensant par la variabilité du pas l'épuisement de l'énergie lumineuse au fur et à mesure de sa progression au sein des fibres optiques, afin d'obtenir une lumière homogène et d'intensité égale sur toute la surface de la structure textile.

Selon une alternative non comprise dans l'objet de la protection, la densité des mailles, et par exemple des chainettes du tricot peut varier le long de la structure, là encore, afin de compenser l'épuisement de l'énergie lumineuse au fur et à mesure de son transfert dans lesdites fibres optiques.

Les fibres optiques, à l'instar des autres fils d'un tricot, peuvent être intégrées à la structure textile grâce aux guides des métiers à tricoter classiques, appelés passettes, ou encore par des tubes ou des plaques percées de trous très fins pour permettre et faciliter le guidage des fibres optiques jusque dans les organes de tricotage lors du cycle de formation du textile.

Différents accessoires de tricotage (passettes, tubes, plaques... ) peuvent permettre d'optimiser la densité de fibres optiques, l'intégrité des fibres optiques dans le processus et les armures afin d'obtenir des intensités différentes et un éclairage homogène.

Selon un aspect non revendiqué, grâce à la mise en oeuvre de cette technologie de mailles jetées, il devient possible de modifier la quantité de lumière émise en faisant varier :
- la jauge, c'est-à-dire la densité de fibres optiques ;
- la densité des mailles ;
- la longueur des trames partielles ;
- le diamètre des fibres optiques ;
- le nombre de barres de tricotage introduisant les fibres optiques ou des fils de liages

Selon des aspects non revendiqués, afin de réaliser un textile lumineux avec une lumière homogène sur la largeur et la longueur du textile, les paramètres à ajuster sont :
- la position relative des fibres optiques entre elles : celles-ci peuvent suivre la même courbure, et notamment un courbe proche d'une sinusoïde ou bien être déphasées. Ce déphasage est modulable jusqu'à être complet c'est-à-dire former un 8 ;
- la variation de l'angle de courbure imprimé aux fibres optiques dans le sens chaine, en lien avec la puissance de la source (gestion de l'épuisement de la lumière). Ainsi, l'angle de courbure des fibres optiques intégrées au sein de la structure textile peut être constant ou variable dans le sens chaine.

Bien évidemment, le type et la puissance de la ou des sources lumineuses outre la longueur d'onde de la lumière sont des paramètres qui ont une influence sur les caractéristiques de la lumière émise.

Optionnellement, la structure textile peut être composée à 100% de fibres optiques, mais les fibres optiques peuvent être associées à d'autres matériaux sous forme de fils ou de filets de fibres en matière synthétique (PET (polytéréphtalate d'éthylène), PA (polyamide), PP (polypropylène), PE (polyéthylène), aramide, PEEK, fil gainé silicone...), minérale (verre, basalte) ou des matières biodégradables, résorbables ou biosourcés (PLA (acide polylactique), PGA (polyglycolic acid), PCL (polycaprolactone)...), PBS (poly(butylene succinate)).

Les fibres optiques sont positionnées au sein de la structure textile en trame partielle et intégrées dans un tricot pour lequel différentes constructions peuvent être envisagées :
- tricot à mailles ouvertes (ajourées) ou fermées obtenu par des constructions type chainette, simple tricot, double tricot, satin...
- tricot obtenu sur métier trameur avec insertion de trames continues sans embuvage ;
- tricot 3D, d'épaisseur comprise entre 0,2 millimètres et 10 centimètres, obtenu sur métier double fontures. A noter que pour cette construction particulière, il est possible de réaliser des matériaux « biface ». Plus spécifiquement; il est possible qu'une face seule comporte des fibres optiques et que l'autre face soit réalisée à partir d'un autre polymère type PET, PP, PA, PLA, chitosane, aramide, verre, fils métalliques ou bien que les deux faces comportent des fibres optiques. Le fil entre les deux faces ainsi réalisées, appelé par l'homme de l'art « fil de poil » ou fil de liaison, peut être du fil à base de fil gainé silicone ou d'un autre polymère type PET, PP, PA, PLA, chitosane, aramide, verre. Cependant, les fibres optiques peuvent également être positionnées en fil de poil à condition de les intégrer avec un pas et dans des armures qui respectent le rayon de courbure et l'angle limite d'émission. Le taux d'ouverture et la structure de la maille peuvent être identiques ou différents sur chacune des faces ;
- tricot 3D du type décrit précédemment, mais pour lequel des bandelettes ultra-blanches ou aluminium, et de manière générale pourvues de propriétés réfléchissantes sont intégrées sur l'une des faces ou en cabestan entre les deux faces afin d'assurer la réflexion de la lumière émise par les fibres optiques en direction de l'autre face ; alternativement, ces bandelettes peuvent être choisies opaques, afin de réaliser une occultation totale de la face externe du côté opposée à la face au niveau de laquelle la lumière est émise ;
- structures complexes associant la structure textile de l'invention avec un support réalisé en un matériau tissé, tricoté, non tissé ou un film. Ce type de structure complexe peut permettre, par exemple, de favoriser la réflexion et donc l'intensité de lumière ou la concentration de la lumière en un point déterminé par utilisation de la souplesse du support. Cette association peut être obtenue en mettant en oeuvre la technologie Rachel.

La taille du fil de liage, la tension appliquée sur ce fil en tricotage chaine, Rachel ou crochet, et l'armure choisie constituent également autant de paramètres qui participent à la maîtrise de l'effet lumineux. Ce point constitue un avantage majeur de la technologie tricotage maille jetée.

En outre, le tricot obtenu par la technologie à maille jetée intégrant les fibres optiques joue également le rôle de diffuseur. En effet, selon la nature des mailles (chainette, trames sectionnelles), une quantité plus ou moins importante de fils entourent les fibres optiques, qui, compte tenu de leur degré d'inclinaison, vont émettre une quantité plus ou moins importante de lumière, qui va soit se réfléchir sur les chainettes, les trames, soit se diffracter sur le réseau ainsi constitué.

Ce résultat est à comparer à celui obtenu pour les tentatives de « *macro-bending* » avec une structure tissée, dans laquelle le positionnement des fibres optiques induit la sortie de la lumière perpendiculairement au plan du tissu. Ce faisant :
- seule tout au plus la moitié de la quantité de lumière émise peut être utile à une surface en contact ou en regard avec le tissu ;
- les autres fils du tissu ne participent pas ou peu à la diffusion.

Dans un textile obtenu selon l'invention avec les fibres optiques positionnées en trame partielle, la lumière sort parallèlement au plan de la structure textile, sur une seule face de celui-ci. Ce faisant :
- sensiblement toute la lumière émise par les fibres optiques est orientée en direction de la surface à éclairer ou en contact avec ladite structure, en raison principalement du phénomène de diffusion par réflexion ou réfraction ;
- le textile est comme positionné derrière les fibres optiques et participe donc à la diffusion de lumière.

Les structures textiles ainsi obtenues peuvent présenter une extensibilité importante typiquement comprise entre 5 et 170%, tout en assurant une continuité dans l'émission lumineuse résultant de la mise en oeuvre de fibres optiques. Cette extensibilité peut être obtenue tant en sens production qu'en sens travers et éventuellement dans les deux directions. L'extensibilité doit s'entendre ici comme l'allongement du textile soumis à une force de traction unidirectionnelle calculée entre la longueur initiale et la longueur à la rupture : ΔL = (Lf - L₀)/L₀.
Avec L : longueur mesurée selon une direction
Lf : longueur finale de la structure après exercice de la force de traction ;
L₀ : longueur initiale de la structure avant exercice de la force de traction.

### BREVE DESCRIPTION DES DESSINS

La manière dont l'invention peut être réalisée et les avantages qui en découlent, ressortiront mieux des exemples de réalisation qui suivent, données à titre indicatif et non limitatif à l'appui des figures annexées.
La figure 1 est une représentation schématique d'une première forme de réalisation mettant en oeuvre des chainettes et des trames partielles comme tricot, le pas étant non variable et non progressif, cette représentation ne fait pas partie de l'objet de protection revendiqué.
La figure 2 est une vue analogue à la figure 1, mettant en oeuvre comme tricot support deux simples tricots opposés et un pas de trame partiel variable.
La figure 3 illustre des déphasages entre deux fibres optiques adjacentes, le pas étant non variable et non progressif, cette représentation ne fait pas partie de l'objet de protection revendiqué.
Les figures 4 à 6 présentent des pas de trame non variable et non progressif n'illustrant pas le principe de l'objet revendiqué.

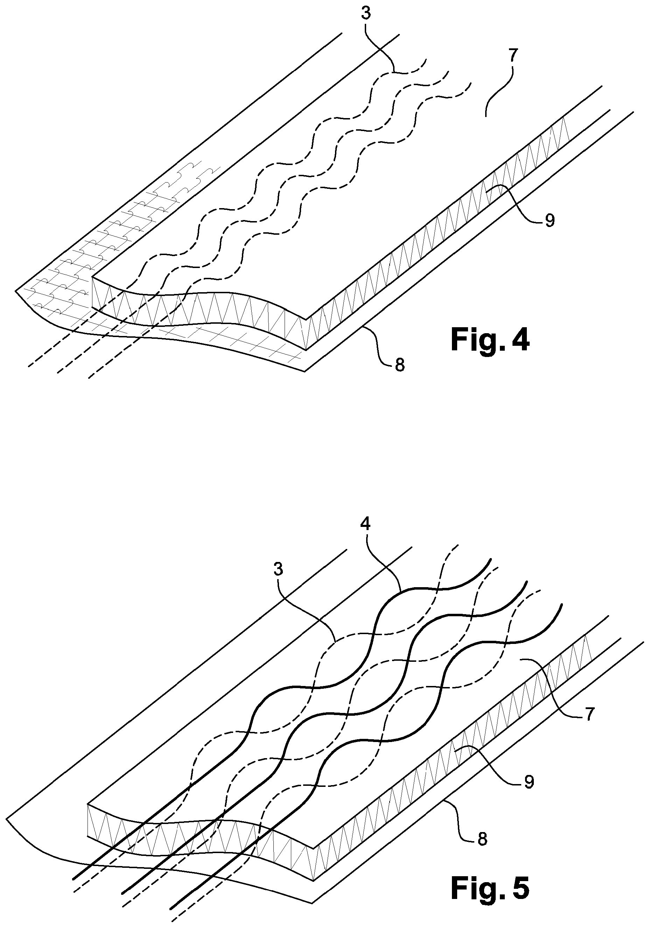

La figure 4 est une représentation schématique d'une structure textile 3D de l'invention intégrant des fibres optiques sur l'une de ses deux faces principales.
La figure 5 est une vue analogue à la figure 4, mais dans laquelle les fibres optiques sont présentes sur les deux faces principales.

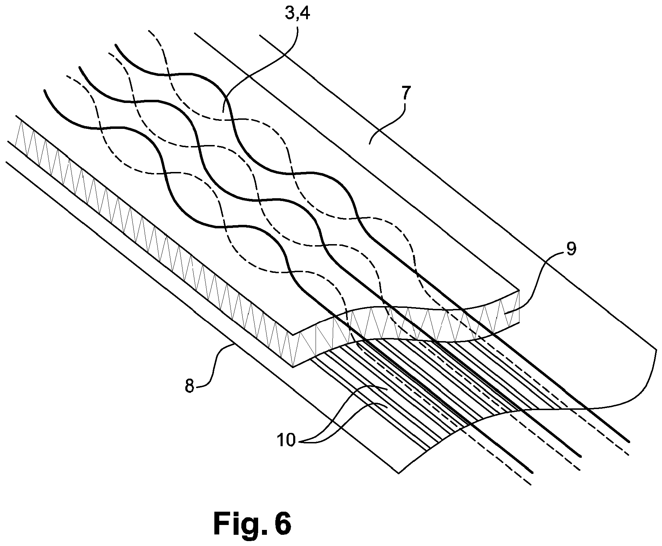

La figure 6 est une représentation schématique d'une structure textile 3D de l'invention intégrant des fibres optiques sur l'une de ses deux faces principales et des bandelettes réfléchissantes ou opaques montées en cabestan sur l'autre face principale.

### DESCRIPTION DETAILLEE DE L'INVENTION

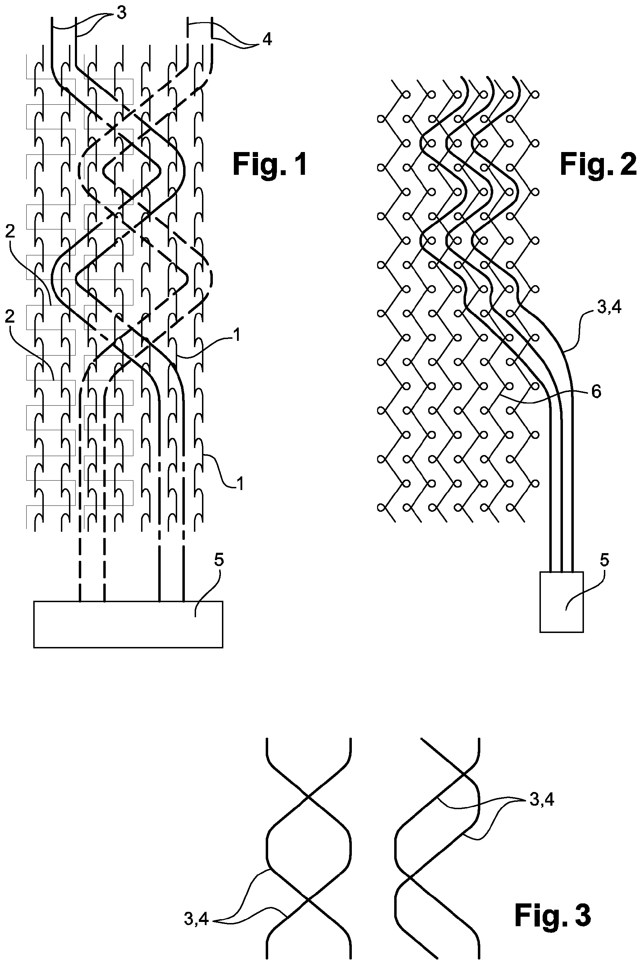

On a donc représenté en relation avec la figure 1 une vue schématique d'une première forme de réalisation de la structure textile tricotée selon un exemple non couvert par la revendication 1.

Cette structure textile est un tricot à mailles jetées, dans lequel :
- la structure proprement dite est constituée de chainettes **1** et de trames sectionnelles **2**, par exemple réalisées en polymère synthétique, naturel ou en fibres minérales ;
- les fibres optiques **3, 4**, de facture classique, sont fixées sur cette structure en trames partielles.

L'extrémité des fibres optiques est connectée à une source de lumière, symbolisée par la référence **5**, et ce, de manière connue.

Cette structure est obtenue avec un métier Chaîne ou Rachel ou Crochet, tel que commercialisé par la société Karl Mayer ou Liba ou Cornez ou Muller.

Les avantages particuliers d'une telle structure à mailles jetées résident principalement dans le fait qu'elle est obtenue en une seule étape, et que l'on peut sensiblement figer l'angle de courbure que l'on peut imprimer aux fibres optiques **3, 4**.

En outre, la structure tricotée particulière à mailles jetées, permet de régler la densité de courbure des fibres optiques en sens chaine et la longueur de trame partielle en sens travers. Ce faisant, on peut adapter l'intensité lumineuse, et optimiser l'homogénéité en fonction de l'application visée et donc de la puissance lumineuse souhaitée.

Indépendamment de la nature tricotée de la structure textile de l'invention, il est également possible de jouer sur ces paramètres en faisant varier la densité de fibres optiques :
- par le nombre de barres de tricotage qui sont alimentées en fibres optiques
- par la jauge du métier et l'enfilage plein ou non choisi pour les fibres optiques.

La structure textile selon l'invention est donc susceptible de présenter une grande souplesse. En fonction de la nature des fils qui la constituent, on peut la rendre confortable avec une extensibilité réelle mais ne perturbant pas la régularité d'émission lumineuse, de sorte qu'elle est à même de servir de source lumineuse en vue du traitement de tumeurs cancéreuses en photothérapie dynamique ou le traitement de la jaunisse du nourrisson.

En effet, par le choix de la source lumineuse et la sélection de la longueur d'onde appropriée, il est possible d'obtenir une lumière homogène de longueur d'onde contrôlée capable d'activer un photo-sensibilisant dans le cas de la photothérapie, ou avec de la lumière bleue de détruire la substance bilirubine contenue dans le sang dans le cas de la jaunisse du nourrisson.

En raison de la souplesse de la structure, il devient possible de s'adapter de manière relativement simple aux géométries complexes des zones à traiter. Ainsi quelle que soit la pathologie, les zones à traiter reçoivent toutes exactement les mêmes quantités de lumière (zone concaves ou convexes, creuses complexes), ce que l'on ne savait faire efficacement avec les technologies de l'art antérieur par panneau lumineux rigide ou textile tissage rigide.

Il convient en outre de préciser que la structure textile de l'invention présente l'avantage d'être obtenue en une seule étape de fabrication, de ne provoquer aucun échauffement ou spot lumineux, de diffuser une lumière identique en tout point du textile. Par ailleurs, en raison de la multiplicité des choix d'armure (voir par exemple figure 2, la mise en oeuvre de deux simples tricots opposés **6**) de la technologie maille jetée, on peut régler à loisir l'angle de courbure de la fibre optique, et donc corollairement l'effet lumineux souhaité.

La figure 2 illustre une armure de simple tricot, permettant à la structure de développer une plus grande extensibilité. Cette structure peut être utilisée seule, telle qu'illustrée, ou être associée à des chainettes afin de garantir parfaitement le tenue constante des angles des fibres optiques.

Toujours dans le but d'optimiser l'homogénéité et la diffusion de la lumière émise par les fibres optiques, il est possible grâce à l'utilisation de la technologie à mailles jetées de jouer sur le déphasage entre deux fibres optiques adjacentes.

On a de fait symbolisé différent types de déphasage sur la figure 3, qui du fait de présenter des pas de trame non variable, n'illustre pas l'objet de la protection revendiquée.

On a représenté en relation avec les figures 4 et 5 une structure textile 3D qui ne présentant pas la caractéristique de pas de trame partielle variable ou progressif, n'illustre pas l'objet revendiqué.

Ces structures 3D sont réalisées sur métier double fontures Chaîne ou Rachel ou Crochet, tels que commercialisés par la société Karl Mayer ou Cornez ou Muller. Ce type de structures ne peut être obtenu que par la technologie maille jetée double fontures.

Au sein de la figure 4, les fibres optiques **3** ne sont présentes qu'au niveau d'une seule **7** des deux faces principales **7** et **8** de ladite structure 3D.

Dans ce cas, lesdites fibres optiques sont positionnées en trame partielle comme sur la figure 1, pour donner une homogénéité d'émission optimisée.

La seconde face **8** et les fils de poil ou de liaison **9** sont par exemple réalisés en PET, PA, PP, PE, verre, PLA, chitosane, fils métalliques...

Selon cette forme de réalisation, seule la face **7** intégrant les fibres optiques émet de la lumière.

Selon la variante non revendiquée illustrée à la figure 5, la structure 3D comporte des fibres optiques **3, 4** sur ses deux faces principales **7, 8**, là encore, préférentiellement positionnées en trame partielle. L'entretoise **9** constituée par les fils de poil ou de liaison est par exemple réalisés en PET, PA, PP, PE, verre, PLA, chitosane, fils métalliques.... Dans cette configuration, les deux faces émettent de la lumière.

Selon encore une variante de la structure 3D de cette figure 5, non représentée et non revendiquée, on réduit de manière importante la largeur (ou épaisseur) de l'entretoise. Ce faisant, on a l'apparence d'une structure avec une faible épaisseur, tout en disposant d'une puissance lumineuse doublée.

Selon une variante non représentée et non revendiquée, les fibres optiques font fonction et remplacent partiellement ou totalement les fils de poil de l'entretoise, et sont absentes des deux faces principales. Ces dernières sont par exemple réalisées en PET, PA, PP, PE, verre, PLA, chitosane, fils métalliques. La structure textile ainsi obtenue émet ainsi des spots lumineux sur les deux faces faces.

On a représenté en relation avec la figure 6, selon un mode de réalisation non revendiquée, une variante des structures précédentes. Il s'agit là encore d'une structure 3D, dans laquelle les fibres optiques **3, 4** sont présentes sur une seule face **7,** et préférentiellement positionnées en trame partielle.

La face opposée **8** de la structure 3D et l'entretoise **9** peuvent être réalisées en PET, PA, PP, PE, Verre, PLA, Chitosane, fils métalliques.

Par ailleurs, la face **8** comprend dans sa structure des bandelettes **10** de largeur comprise préférentiellement entre 4 et 40 millimètres, introduites en cabestan. Ces bandelettes **10** sont choisies brillantes (ultra blanche, argentée, aluminisées...) afin de générer la réflexion de la lumière émise par les fibres optiques en direction de la face **7**, ou à l'inverse très opaque, afin réaliser une occultation totale de la face externe **8** du côté opposée à la face **7**.

Ces différentes structures permettent, ainsi que déjà mentionné précédemment, de réaliser des dispositifs médicaux pour la photothérapie, le traitement de la jaunisse, les traitements de divers cancers. Elles permettent également de générer des effets cosmétiques, notamment de rajeunissement et de vascularisation de la peau.

Elles peuvent également être utilisées dans tout type d'applications pour lesquelles la lumière est un activateur d'éléments chimiques « molécules photo activables » par l'effet de la lumière des surfaces complexes : photo catalyse, photochromie, photo amorceur...

Enfin de telles structures peuvent être utilisées dans le domaine de la décoration, de l'affichage dynamique, et être intégrées dans des éléments ou matériaux composites.

On conçoit ce faisant tout l'intérêt de l'invention qui permet de manière simple et économique la réalisation de structures tricotées permettant l'émission de lumière calibrée en longueur d'onde, en intensité et en homogénéité.

## Revendications

1. Structure textile tricotée lumineuse comprenant en son sein des fibres optiques (3, 4), dont au moins l'une des extrémités est connectable à une source de lumière, lesdites fibres optiques (3, 4) étant capables d'émettre de la lumière en raison du dépassement de leur angle de courbure limite, ledit tricot étant obtenu par la technologie à mailles jetées type Chaîne ou Rachel ou Crochet, ***caractérisée* :**
• **en ce que** l'émission lumineuse est homogène sur toute la surface de ladite structure,
• et **en ce que** l'homogénéité de l'émission lumineuse est obtenue en raison du positionnement des fibres optiques (3, 4) en trames partielles au sein de ladite structure selon un pas variable ou progressif compensant par la variabilité de l'angle de courbure des fibres optiques l'épuisement de l'énergie lumineuse au fur et à mesure de sa progression au sein des fibres optiques.

2. Structure textile tricotée selon la revendication 1, ***caractérisée* en ce que** les deux extrémités des fibres optiques sont reliables chacune à une source lumineuse distincte.

3. Structure textile tricotée selon l'une des revendications 1 et 2, ***caractérisée* en ce que** le tricot est de type 3D d'épaisseur comprise entre 0,2 millimètres et 10 centimètres obtenu sur un métier à double fontures, les fibres optiques étant positionnées sur l'une (7) des faces principales (7, 8), sur les deux, ou en fil de poil ou de liaison.

4. Structure textile tricotée selon l'une des revendications 1 à 3, ***caractérisée* en ce qu'**elle présente une capacité d'extension comprise entre 5 et 170%.

5. Structure textile tricotée selon l'une des revendications 1 à 4, ***caractérisée* en ce qu'**elle est associée par technologie Rachel à une couche d'un matériau tissé, tricoté, non tissé ou d'un film.

6. Structure textile tricotée selon l'une des revendications 1 à 5, ***caractérisée* en ce que** les fils entrant dans sa constitution, autre que les fibres optiques, sont constitués :
• par des fils synthétiques choisis dans le groupe comprenant le PET, les PA, le polyéthylène, le polypropylène, les aramides et le PEEK ; et/ou
• par des fils biosourcés par exemple le PLA ou le chitosane et/ou
• par des fils biodégradables ou résorbables tels que le PGA, PCL, PBS, et/ou
• par de fibres minérales par exemple le verre ou le basalte.

7. Utilisation de la structure textile tricotée selon l'une des revendications 1 à 6 pour la photo-activation de molécules photo-activables.

8. Structure textile tricotée selon l'une des revendications 1 à 6 pour une utilisation comme source de lumière en photothérapie dynamique.

9. Structure textile tricotée selon l'une des revendications 1 à 6 pour une utilisation comme source de lumière dans le traitement contre la jaunisse.

10. Utilisation de la structure textile tricotée selon l'une des revendications 1 à 6 dans le secteur des composites, de la décoration, de l'affichage dynamique.

## Patentansprüche

1. Leuchtende gewirkte Textilstruktur, die in ihrem Inneren optische Fasern (3, 4) umfasst, von denen mindestens ein Ende mit einer Lichtquelle verbindbar ist, wobei die optischen Fasern (3, 4) in der Lage sind, aufgrund der Überschreitung ihres Grenzkrümmungswinkels Licht zu emittieren,
wobei das Gewirke durch die Ketten- oder Raschel- oder Häkelmaschen-Technologie erhalten wird, ***dadurch gekennzeichnet*:**
• **dass** die Lichtemission über die gesamte Oberfläche der Struktur homogen ist,
• und **dass** die Homogenität der Lichtemission aufgrund der Positionierung der optischen Fasern (3, 4) in Teilrastern innerhalb der Struktur gemäß einer variablen oder progressiven Schrittweite erhalten wird, die durch die Variabilität des Krümmungswinkels der optischen Fasern den Verlust der Lichtenergie nach und nach entsprechend ihrem Fortschreiten innerhalb der optischen Fasern kompensiert.

2. Gewirkte Textilstruktur nach Anspruch 1, ***dadurch gekennzeichnet*, dass** die beiden Enden der optischen Fasern jeweils mit einer separaten Lichtquelle verbindbar sind.

3. Gewirkte Textilstruktur nach einem der Ansprüche 1 und 2, ***dadurch gekennzeichnet*, dass** das Gewirke dreidimensional mit einer Dicke zwischen 0,2 Millimetern und 10 Zentimetern ist, das auf einer Maschine mit doppeltem Nadelbett hergestellt wird, wobei die optischen Fasern auf einer (7) der Hauptflächen (7, 8), auf beiden oder als Pol- oder Verbindungsgarn positioniert sind.

4. Gewirkte Textilstruktur nach einem der Ansprüche 1 bis 3, ***dadurch gekennzeichnet*, dass** sie eine Dehnbarkeit zwischen 5 und 170 % aufweist.

5. Gewirkte Textilstruktur nach einem der Ansprüche 1 bis 4, ***dadurch gekennzeichnet*, dass** sie mittels Rascheltechnologie mit einer Schicht aus einem gewebten, gewirkten, nicht gewebten Material oder einer Folie verbunden wird.

6. Gewirkte Textilstruktur nach einem der Ansprüche 1 bis 5, ***dadurch gekennzeichnet*, dass** die Garne, aus denen sie besteht, abgesehen von den optischen Fasern, bestehen:
• aus synthetischen Garnen, die aus der Gruppe umfassend PET, PA, Polyethylen, Polypropylen, Aramide und PEEK ausgewählt werden; und/oder
• aus biobasierten Garnen, z. B. PLA oder Chitosan, und/oder
• aus biologisch abbaubaren oder resorbierbaren Fäden wie PGA, PCL, PBS und/oder
• aus Mineralfasern, z. B. Glas oder Basalt.

7. Verwendung der gewirkten Textilstruktur nach einem der Ansprüche 1 bis 6 zur Photoaktivierung von photoaktivierbaren Molekülen.

8. Gewirkte Textilstruktur nach einem der Ansprüche 1 bis 6 zur Verwendung als Lichtquelle bei der photodynamischen Therapie.

9. Gewirkte Textilstruktur nach einem der Ansprüche 1 bis 6 zur Verwendung als Lichtquelle bei der Behandlung von Gelbsucht.

10. Verwendung der gewirkten Textilstruktur nach einem der Ansprüche 1 bis 6 in den Bereichen Verbundstoffe, Dekoration, Digital Signage.

## Claims

1. Luminous knitted textile structure comprising within it, optical fibres (3, 4), at least one of the ends of which can be connected to a light source, said optical fibres (3, 4) being capable of emitting light due to the exceeding of their limit bending angle,
said knitted fabric being obtained by the Chain or Raschel or Crochet-type warp stitch technology, ***characterised*:**
• **in that** the light emission is homogeneous over the entire surface of said structure,
• and **in that** the homogeneity of the light emission is obtained due to the positioning of the optical fibres (3, 4) in partial frames within said structure along a variable or progressive pitch compensating, through the variability of the bending angle of the optical fibres, the depletion of the light energy as it progresses within the optical fibres.

2. Knitted textile structure according to claim 1, ***characterised* in that** the two ends of the optical fibres can each be connected to a distinct light source.

3. Knitted textile structure according to any one of claims 1 and 2, ***characterised* in that** the knitted fabric is of the 3D type, of thickness of between 0.2 millimetres and 10 centimetres, obtained on a double-needle bed machine, the optical fibres being positioned on one (7) of the main faces (7, 8), on both of them, or pile yarn or connecting yarn.

4. Knitted textile structure according to any one of claims 1 to 3, ***characterised* in that** it has an extension capacity of between 5 and 170%.

5. Knitted textile structure according to any one of claims 1 to 4, ***characterised* in that** it is associated by Raschel technology with a layer of a woven, knitted, non-woven material or of a film.

6. Knitted textile structure according to any one of claims 1 to 5, ***characterised* in that** the yarns entering into its constitution, other than the optical fibres, are constituted:
• by synthetic yarns chosen from the group comprising PET, PA, polyethylene, polypropylene, aramids and PEEK; and/or
• by biosourced yarns, for example, PLA or chitosan, and/or
• by biodegradable or resorbable yarns, such as PGA, PCL, PBS, and/or
• by mineral fibres, for example, glass or basalt.

7. Use of the knitted textile structure according to any one of claims 1 to 6 for the photoactivation of photoactivable molecules.

8. Knitted textile structure according to any one of claims 1 to 6, for a use as a light source in dynamic phototherapy.

9. Knitted textile structure according to any one of claims 1 to 6, for a use as a light source in treating jaundice.

10. Use of the knitted textile structure according to any one of claims 1 to 6 in the composite, décor and dynamic display field.
